# EUROPÄISCHE PATENTSCHRIFT

(11) **EP 1 976 946 B1**
(45) Veröffentlichungstag und Bekanntmachung des Hinweises auf die Patenterteilung: **17.03.2010**
(21) Anmeldenummer: 06830849.3
(22) Anmeldetag: 28.12.2006
(51) Int. Cl.: C09D 5/08, C09D 4/00, C09D 183/14

(54) **KORROSIONSSCHUTZSCHICHT AUF METALLOBERFLÄCHEN**
ANTICORROSIVE LAYER ON METAL SURFACES
COUCHE DE PROTECTION CONTRE LA CORROSION SUR DES SURFACES MÉTALLIQUES

(30) Priorität: 26.01.2006 DE 102006003956
(43) Veröffentlichungstag der Anmeldung: 08.10.2008
(73) Patentinhaber: Evonik Degussa GmbH, 45128 Essen (DE)
(72) Erfinder: STANDKE, Burkhard, 79540 Lörrach (DE); WASSMER, Christian, 79688 Hausen (DE); JENKNER, Peter, 46485 Wesel (DE)
(86) Internationale Anmeldenummer: PCT/EP2006/070261
(87) Internationale Veröffentlichungsnummer: WO 2007/085339

(56) Entgegenhaltungen:
- EP-A- 1 375 615
- WO-A-2006/010388
- US-A- 5 357 024
- US-A1- 2003 024 432

## Beschreibung

Die vorliegende Erfindung betrifft eine neue Korrosionsschutzbeschichtung für Metall, ein Verfahren zu deren Herstellung und deren Verwendung.

Silane finden zunehmendes Interesse als Einsatzstoffe bei der Herstellung von Nanokompositen nach dem Sol-Gel-Verfahren, u.a. EP 1 288 245 A, EP 0 982 348 A, DE 19816136 A, WO 99/036359. Solche Nanokomposite werden in der Regel als Beschichtungsmittel für die unterschiedlichsten Anwendungen eingesetzt.

Auch sind verschiedenste Lacke als Beschichtungsmittel, insbesondere auch zum Schutz von Metallen vor Korrosion, lange bekannt. Insbesondere beim Kfz-Bau wird in der Regel nicht nur eine Lackschicht zum Schutz der Karosserie verwendet.

Ein wesentlicher Nachteil bekannter Beschichtungssysteme auf der Basis von Sol-Gel-Formulierungen ist häufig ein Gehalt an Chlorid und ein hoher Anteil an organischen, meist flüchtigen sowie toxischen Lösemitteln, welche als Nebenprodukt bei der Hydrolyse der Silane anfallen oder als Verdünnungsmittel zugesetzt werden. Die Verwendung einer für eine vollständige Hydrolyse der Silane unzureichenden Menge Wasser und die Nutzung von sauren Hydrolysekatalysatoren ermöglicht die Herstellung von über Monate lagerstabilen, aber lösemittelhaltigen Sol-Gel-Systemen. Bekannt ist auch, dass die Erhöhung der Wassermenge zur vollständigen Hydrolyse der Alkoxygruppen und damit drastischen Reduzierung der Lagerstabilität der Systeme bzw. zur schnellen Gelbildung nach Abschluss des Hydrolyseprozesses führt, insbesondere, wenn solche Systeme einen möglichst hohen Gehalt an Feststoff aufweisen sollen.

Die noch nicht veröffentlichte deutsche Patentanmeldung 10 2004 037 045.1 betrifft ein spezielles Sol-Gel-Beschichtungsmittel, das auch zum Schutz von Metalloberflächen vor Korrosion eingesetzt werden kann.

Der vorliegenden Erfindung lag die Aufgabe zugrunde, eine weitere Möglichkeit für den Korrosionsschutz von Metallen bereitzustellen.

Die Aufgabe wird erfindungsgemäß entsprechend den Angaben der Patentansprüche gelöst.

So wurde in überraschender Weise gefunden, dass man eine Metalloberfläche, vorzugsweise Aluminium, Aluminiumlegierungen, Stahl, verzinkten Stahl sowie Edelstahl, vor Korrosion noch besser schützen kann, wenn man zunächst ein Sol-Gel-Beschichtungsmittel (nachfolgend auch Sol-Gel-System, Sol-Gel-Zusammensetzung oder kurz Zusammensetzung genannt), das mindestens auf den Komponenten (i) einem Glycidyloxypropylalkoxysilan, (ii) einem kolloiddispersen, wässrigen Kieselsol mit einem Feststoffgehalt von > 1 Gew.-%, vorzugsweise > 20 Gew.-%, besonders bevorzugt > 30 Gew.-%, (iii) einer organischen Säure als Hydrolysekatalysator, insbesondere Essigsäure, Propionsäure oder Maleinsäure, und (iv) Zirkontetrapropylat [auch mit n-Propylzirkonat bezeichnet: Zr(O-C₃H₇)₄], Butyltitanat, insbesondere n-Butyltitanat [Ti(O-C₄H₉)₄] oder Titanacetylacetonat als Vemetzer basiert, auf eine geeigneterweise gesäuberte Metalloberfläche aufbringt, den Sol-Gel-Film trocknet sowie aushärtet, vorzugsweise beträgt dabei die Schichtdicke des Films 0,1 bis 10 µm, und anschießend darauf eine oder mehrere Schichten aufbringt und ebenfalls trocknet sowie aushärtet. Bei der(n) auf der Sol-Gel-Schicht aufgebrachten weiteren Schicht(en) kann es sich vorteilhaft um Beschichtungen auf Basis organischer Harze oder um weitere Sol-Gel- oder Hybridbeschichtungen handeln, beispielsweise solche mit organischen Harzen modifizierte Sol-Gel-Systeme. Bevorzugt - aber nicht ausschließlich - angeführt seien hier Beschichtungen auf Basis von Polyesterharzen, Polyetherharzen, Acrylatharzen, Epoxidharzen, Alkylharzen, Melaminharzen, Urethanharzen oder deren Mischungen als wasserbasierte, lösemittelbasierte flüssige Systeme oder lösemittelfreie Pulverlacksysteme. Besonders bevorzugt bringt man auf die Sol-Gel-Schicht eine Deckschicht auf Basis eines der zuvor genannten organischen Harzsysteme, insbesondere ein Polyesterharz, auf.

Durch die dünne, erfindungsgemäße Sol-Gel-Beschichtung der Metalloberfläche kann überraschenderweise die korrosionshemmende Wirkung eines Lackbeschichtungssystems nochmals deutlich verbessert werden. Weiterhin wird die Haftung des Deckbeschichtungssystems auf dem Metallsubstrat durch die Sol-Gel-Schicht deutlich verbessert. Auch die Sol-Gel-Schicht allein zeigt ausgezeichnete antikorrosive Wirkung, was als temporärer Korrosionsschutz von Metalloberflächen, z. B. bei der Lagerung geprimerter Metallsubstrate vor der Endnutzung oder Endlackierung, genutzt werden kann.

Durch Auswahl weiterer spezieller Additive, vgl. nachfolgend die Komponenten (v) und (vi), kann die Performance der vorliegenden Sol-Gel-Beschichtung nochmals verbessert werden. Als Additive eignen sich insbesondere Phosphorsäure, Phosphate, Heteropolysäuren und deren Salze, wässrige Dispersionen organischer Bindemittel, insbesondere wässrige Acrylatdispersionen, sowie anorganische Nanopartikel, vorzugsweise pyrogen erzeugte Nanopartikel, insbesondere fumed silica, d. h. pyrogen hergestellte Kieselsäure (Aerosil^{®}), sowie Aminoalkylsilane bzw. -siloxane einschließlich ihrer wässrigen Lösungen.

Gegenstand der vorliegenden Erfindung ist somit ein Verfahren zur Erzeugung einer Korrosionsschutzschicht auf einer Metalloberfläche, wobei man
a) eine Sol-Gel-Zusammensetzung, die auf der Umsetzung mindestens der Komponenten
   (i) einem Glycidyloxypropylalkoxysilan,
   (ii) einem wässrigen Kieselsol mit einem SiO₂-Gehalt von > 1 Gew.-%,
   (iii) einer organischen Säure als Hydrolysekatalysator und
   (iv) n-Propylzirkonat, Butyltitanat oder Titanacetylacetonat als Vemetzer basiert,
      auf die gegebenenfalls vorbehandelte, d. h. gereinigte Metalloberfläche aufbringt und trocknet und/oder härtet und
b) anschließend auf die Sol-Gel-Schicht mindestens eine weitere Schicht aufbringt und trocknet und/oder härtet.

Vorteilhaft kann man in Schritt a) des erfindungsgemäßen Verfahrens eine Sol-Gel-Zusammensetzung einsetzen, die auf mindestens einer weiteren Komponente (v) aus der Reihe Tetraalkoxysilan, Alkylalkoxysilan sowie Phenyltrialkoxysilan basiert.

Ebenfalls kann man vorteilhaft in Schritt a) des erfindungsgemäßen Verfahren eine Sol-Gel-Zusammensetzung einsetzen, die auf mindestens einer weiteren Komponente (vi) aus der Reihe der Phosphorsäuren, der Phosphate, der Polysäuren bzw. Heteropolysäuren, der Salze der Poly- bzw. Heteropolysäuren, der wässrigen Dispersionen organischer Bindemittel, der Verlaufshilfsmittel, der Benetzungsmittel, der Nanopartikel, der Tenside, der Aminoalkylsilane sowie der Aminoalkylsiloxane basiert.

Weiter kann man in Schritt a) des erfindungsgemäßen Verfahrens vorteilhaft eine Sol-Gel-Zusammensetzung einsetzen, die einen pH-Wert von 6 bis 9, vorzugsweise 7 bis 8, aufweist,
wobei man den pH-Wert in der Regel durch Zusatz einer wasserlöslichen Base einstellt. Dazu eignen sich beispielsweise Ammoniak oder organische Amine sowie aus der Reihe der Additive gemäß (vi) besonders vorteilhaft Aminosilane, wie

H₂N-(CH₂)₃-Si(OCH₃)₃ (AMMO)

H₂N-(CH₂)₃-Si(OC₂H₅)₃ (AMEO)

H₂N-(CH₂)₂-NH-(CH₂)₃-Si(OCH₃)₃ (DAMO)

H₂N-(CH₂)₂-NH-(CH₂)₃-Si(OC₂H₅)₃ (DAEO)

H₂N-(CH₂)₂-NH-(CH₂)₂-NH-(CH₂)₃-Si(OCH₃)₃ (TRIAMO)

(OCH₃)₃Si-(CH₂)₃-NH-(CH₂)₃-Si(OCH₃)₃ (BisAMMO)

(OCH₃)₃Si-(CH₂)₃-NH-(CH₂)₃-Si(OC₂H₅)₃ (BisAMEO)

oder wässrige Lösungen der jeweiligen zuvor genannten Aminoalkylsilane, beispielsweise Dynasylan^{®} 1122 oder Dynasylan^{®} 1124, oder so genannte Aminoalkylsiloxane, insbesondere wässrige Zubereitungen, wie Dynasylan^{®} 1151, oder so genannte Hydrosile, die auf mindestens einem der zuvor genannten Aminoalkylsilane basieren, wie sie als solche später noch näher beschrieben sind.

Femer kann man eine vorliegende Zusammensetzung, wie sie in Schritt a) eingesetzt wird, zusätzlich mit Wasser; vorzugsweise VE-Wasser, verdünnen.

Auch ist Gegenstand der vorliegenden Erfindung eine Korrosionsschutzschicht auf einer Metalloberfläche, die nach dem erfindungsgemäßen Verfahren erhältlich ist.

Die Herstellung eines entsprechend Schritt a) erfindungsgemäß eingesetzten Sol-Gel-Beschichtungsmittels erfolgt in der Regel durch Mischen der Komponenten unter Hydrolysebedingungen und ist hier sowie in DE 10 2004 037 045.1 ausführlich beschrieben.

Zur Applikation dünner Schichten ist es bei bestimmten Applikationsmethoden, wie Sprühen oder Tauchen, erforderlich, das Sol-Gel-System in relativ stark verdünnter Lösung zu applizieren. Die in DE 10 2004 037 045.1 beschriebenen Sol-Gel-Systeme sind zum Teil nur ungenügend wasserverdünnbar. Stark verdünnte Systeme können Ausfällungen sowie Sedimentationen bei Lagerung zeigen, insbesondere bei leicht erhöhter Temperatur. Dieser Nachteil kann vorteilhaft vermieden werden, indem man das Verhältnis der Komponenten (ii) und (i) bei der Synthese des Sol-Gel-Systems speziell einstellt. Bei einem Massenverhältnis V = Masse Feststoff Komponente (ii)/Masse Komponente (i) von 0,75 und darunter lassen sich insbesondere wasserverdünnbare und in verdünnter Form lagerstabile Sol-Gel-Systeme vorteilhaft herstellen.

Die Sol-Gel-Schicht lässt sich in der Regel auf vielfältige Weise auf das Metallsubstrat auftragen. Es eignen sich in der Regel alle in der Lackierbranche für flüssige Beschichtungsstoffe geeignete Verfahren, wie Sprühen, Spritzen, Streichen, Rollen, Tauchen und Rakeln. Vorzugsweise werden Trockenschichtdicken von 0,1 bis 10 µm angestrebt, besonders bevorzugt sind Trockenschichtdicken von 1 µm und darunter. Die Sol-Gel-Schicht trocknet in der Regel an der Luft zu grifffesten Beschichtungen. Eine Nachvemetzung kann bei erhöhter Temperatur erfolgen. Vorzugsweise trocknet man die auf eine Metalloberfläche aufgebrachte Sol-Gel-Schicht zunächst einige Minuten bei Raumtemperatur, vorzugsweise 0,5 bis 100 Minuten, besonders bevorzugt 1 bis 20 Minuten, ganz besonders bevorzugt 5 bis 10 Minuten, bevor man vorteilhaft eine thermische Endhärtung, vorzugsweise bei 100 bis 400 °C, besonders bevorzugt bei 150 bis 250 °C, ganz besonders bevorzugt bei 180 bis 220 °C, durchführt. Die Zeit für die Endhärtung kann je nach Temperatur zwischen einigen Sekunden, Tagen und Wochen variieren. Bevorzugt liegt sie zwischen 0,5 bis 60 Minuten, besonders bevorzugt zwischen 0,5 bis 20 Minuten. Insbesondere hat sich die Aushärtung unter Umluftbedingungen, beispielsweise im Umlufttrockenschrank, bei einer Temperatur von 200 bis 220 °C in einem Zeitraum von 5 bis 20 Minuten bewährt.

Die weitere(n) Schicht(en) gemäß Schritt b) kann/können in an sich bekannter Weise, am besten nach den Angaben des Herstellers für das betreffende Lacksystem, auf die vorliegende Sol-Gel-Schicht aufgetragen werden. Es bestehen keine Einschränkungen bezüglich Applikationsmethode sowie Lacksystem soweit zur Endhärtung des Lacksystems eine Temperatur von 400 °C nicht überschritten werden muss.

Bevorzugt wählt man für die Sol-Gel-Beschichtungszusammensetzung Komponente (i) aus der Reihe 3-Glycidyloxypropyltrimethoxysilan, 3-Glycidyloxypropyltriethoxysilan, 3-Glycidyloxypropylmethyldimethoxysilan, 3-Glycidyloxypropylmethyldiethoxysilan oder einer Mischung aus mindestens zwei der zuvor genannten Silane aus.

Als Komponente (ii) bevorzugt man ein meist kationisches kolloiddisperses Kieselsol mit einem Feststoffgehalt von > 1 bis 50 Gew.-%, besonders bevorzugt 20 bis 50 Gew.-%, ganz besonders bevorzugt von 30 bis < 50 Gew.-%, insbesondere von 40 bis < 50 Gew.-%, d. h. rund 45 Gew.-%, wobei die Bestimmung des Feststoffgehalts gemäß DIN EN ISO 3251 erfolgt. Insbesondere weisen bevorzugte wässrige Kieselsole einen pH-Wert von 3 bis 5, insbesondere von 3,5 bis 4, auf. Man kann aber auch alkalisch oder neutral stabilisiertes Kieselsol einsetzen. Weiterhin können erfindungsgemäß verwendete Kieselsole neben amorphen, wässrigen SiO₂-Partikeln auch weitere Sol-Gel bildende wässrige Elementoxide, wie Aluminiumoxide oder Silicium-/Aluminiumoxide oder Titanoxide oder Zirkonoxide oder Zinkoxid oder eine Mischung aus mindestens zwei der zuvor genannten Oxide, enthalten. Darüber hinaus enthalten bevorzugte Kieselsole in der Regel amorphe, wässrige Oxidpartikel mit einer durchschnittlichen Teilchengröße von 40 bis 400 nm, beispielsweise - aber nicht ausschließlich - Levasil^{®} 200S/30 % sowie Levasil^{®} 100S/45 %.

Die Bestimmung des pH-Werts kann in an sich bekannter Weise erfolgen, z. B. mittels pH-Papier bzw. pH-Sticks oder pH-Elektroden. Femer kann die Bestimmung der Teilchengrößenverteilung in solchen Sol- bzw. Sol-Gel-Systemen in an sich bekannter Weise mittels Laserbeugung (Coulter LS Partikelgrößenmessgerät) erfolgen.

Darüber hinaus kann man in Schritt a) des erfindungsgemäßen Verfahrens vorteilhaft eine Sol-Gel-Zusammensetzung einsetzen, die auf der Umsetzung mindestens der Komponenten
(i) einem Glycidyloxypropylalkoxysilan,
(ii) einem wässrigen Kieselsol mit einem Feststoffgehalt von > 1 Gew.-%,
(iii) einer organischen Säure als Hydrolysekatalysator und
(iv) n-Propylziriconat, Butyltitanat oder Titanacetylacetonat als Vemetzer basiert,
   wobei man von einem Massenverhältnis der Feststoffmasse der Komponente (ii) zu Komponente (i) ≤ 0,75, vorzugsweise 0,1 bis 0,7, besonders bevorzugt 0,2 bis 0,6, insbesondere 0,3 bis 0,5, ausgeht. Ferner kann eine solche Zusammensetzung auch auf zusätzlichen Komponenten (v) sowie (vi) basieren. Solche speziellen Zusammensetzungen zeichnen sich insbesondere dadurch aus, dass sie praktisch in jedem Verhältnis mit Wasser verdünnbar sind und auch die mit Wasser stark verdünnten Systeme über mehr als vier Monate lagerstabil sind. Solche Sol-Gel-Systeme finden erfindungsgemäß insbesondere dann Anwendung, wenn man eine vergleichsweise dünne Sol-Gel-Schicht auf einem Substrat erzeugen möchte, vorzugsweise für Schichtdicken von 0,1 bis 5 µm, besonders bevorzugt solche von rd. 1 µm und dünner.

Weiter bevorzugt man in einer erfindungsgemäß verwendeten Zusammensetzung eine organische Säure aus der Reihe Essigsäure, Propionsäure und Maleinsäure als Komponente (iii). So enthält eine Zusammensetzung vorzugsweise 0,01 bis 3 Gew.-% an Komponente (iii), besonders bevorzugt 0,5 bis 2 Gew.-%, insbesondere 1 bis 2 Gew.-%, bezogen auf die Zusammensetzung.

Der Vemetzer gemäß Komponente (iv) kann als Pulver, Flüssigkeit oder in alkoholischer Lösung bei der Herstellung der Zusammensetzung eingesetzt werden. Vorliegende Zusammensetzungen basieren vorzugsweise auf einem Gehalt an Komponente (iv) von 0,5 bis 8 Gew.-%.

Auch kann man für erfindungsgemäße Zusammensetzungen als weitere Komponente (v) ein Tetraalkoxysilan, insbesondere Tetraethoxysilan, mindestens ein Alkylsilan, geeigneterweise ein Alkylalkoxysilan, insbesondere Dimethyldiethokysilan oder Methyltrimethoxysilan, und/oder mindestens ein Phenyltrialkoxysilan, insbesondere Phenyltriethoxysilan oder Phenylmmethoxysilan vorteilhaft einsetzen.

So kann eine erfindungsgemäße Zusammensetzung Komponente (v) in einer Menge von 1 bis 10 Gew.-%, bezogen auf die Zusammensetzung, enthalten. Geeigneterweise wird dabei ein Anteil an Komponente (ii) entsprechend durch Komponente (v) ersetzt.

Darüber hinaus kann durch Auswahl weiterer spezieller Additive bzw. Komponenten (vi) die Performance der Sol-Gel-Beschichtung nochmals verbessert werden. Als weitere Additive bzw. Komponenten (vi) im Beschichtungsmittel gemäß Schritt a) eignen sich insbesondere Phosphorsäure, Phosphate, wie Alkaliphosphate, beispielsweise NaH₂PO₄, Na₂HPO₄, Na₃PO₄, oder entsprechende Kationensalze, Polysäuren bzw. Heteropolysäuren und deren Salze, wie Chromsäure, Molybdänsäure, Chromate, beispielsweise Alkali- und Erdalkalichromate sowie -dichromate, Calciummolybdat, Molybdophosphorsäure, um nur einige zu nennen, wässrige Dispersionen organischer Bindemittel, insbesondere wässrige Acrylatdispersionen, wie Methylmethacrylat/n-Butylat-Dispersionen, beispielsweise Plextol^{®} D 510, Nanopartikel, bevorzugt anorganische Nanopartikel, vorzugsweise pyrogen erzeugte Nanopartikel, insbesondere fumed silica, d. h. pyrogen hergestellte Kieselsäure (Aerosil^{®}), sowie Aminosilane und Aminoalkylsiloxane, wie sie oben bereits erwähnt sind.

So kann man für besagte Zusammensetzungen als weitere Komponente(n) (vi) Additive einsetzen, welche die Verlaufseigenschaften und die Korrosionsschutzeigenschaften nochmals verbessern. Geeignete Additive (vi) sind Verlaufshilfsmittel und Benetzungsadditive, wie sie üblicherweise in der Farben- und Lackindustrie eingesetzt werden, sowie Phosphorsäure oder deren Salze in einer Konzentration von 0,001 bis 1 Gew.-%, bevorzugt 0,01 bis 0,1 Gew.-%, besonders bevorzugt 0,03 bis 0,06 Gew.-%, oder wässrige Harzdispersionen, insbesondere Acrylatdispersionen, besonders bevorzugt wässrige Methylmethacrylat/n-Butylacrylat Dispersionen, in einer Konzentration von vorzugsweise 0,1 bis 50 Gew.-%, besonders bevorzugt 1 bis 40 Gew.-%, ganz besonders bevorzugt 10 bis 30 Gew.-%, oder Nanopartikel, bevorzugt pyrogen hergestellt, insbesondere pyrogene Kieselsäure in einer Konzentration von 0,01 bis 20 Gew.-%, bevorzugt 1 bis 10 Gew.-%, jeweils bezogen auf die Sol-Gel-Zusammensetzung.

Weiter kann die Stabilität eines vorliegenden, gegebenenfalls stark verdünnten Beschichtungsmittels, d. h. einer Sol-Gel-Zusammensetzung, zusätzlich durch Einstellung des pH-Werts auf 6 bis 9, vorzugsweise 7 bis 8, - wie bereits oben beschrieben - nochmals verbessert werden.

Vorliegende Zusammensetzungen sind in der Regel leicht trübe bis opaleszierende Flüssigkeiten und zeichnen sich in überraschender Weise durch Solpartikel mit einem mittleren Durchmesser von 40 bis 200 nm, vorzugsweise von 50 bis 100 nm, aus. Die Bestimmung der Durchmesser der Solpartikel kann in an sich bekannter Weise zum Beispiel mittels Laserbeugung erfolgen. Besonders überraschend ist dabei, dass die Zusammensetzungen in vorteilhafter Weise auch über eine Lagerzeit von mehr als 3,5 Monaten eine praktisch unveränderte Partikelgrößenverteilung besitzen, d. h. lagerstabil sind.

Weiterhin zeichnen sich vorliegende Zusammensetzungen vorteilhaft durch einen Feststoffgehalt von > 0,5 bis < 60 Gew.-%, vorzugsweise 20 bis 55 Gew.-%, insbesondere 25 bis 50 Gew.-%, bezogen auf die gesamte Zusammensetzung, aus. Der Feststoffgehalt vorliegender Zusammensetzungen wird geeigneterweise in Anlehnung an DIN ISO 3251 bestimmt. Femer können der Feststoffgehalt sowie die Viskosität vorliegender Zusammensetzungen durch Zusatz von Wasser eingestellt werden. Vorteilhaft wird dabei der Wasserzusatz so bemessen, dass ein Feststoffgehalt von ca. 0,5 bis 50 Gew.-% vorliegt. Solche erfindungsgemäßen Zusammensetzungen sind in der Regel in vorteilhafter Weise mehrere Monate lagerstabil.

Darüber hinaus zeichnen sich besagte Sol-Gel-Zusammensetzungen durch einen vergleichsweise niedrigen Gehalt an Hydrolysealkohol von < 5 Gew.-%, vorzugsweise < 3 Gew.-%, besonders bevorzugt < 1 Gew.-%, bezogen auf die Zusammensetzung, aus. Der Gehalt an Alkohol in einer solchen Zusammensetzung kann beispielsweise gaschromatographisch in an sich bekannter Weise bestimmt werden.

Die Lagerstabilität kann zusätzlich verlängert werden, wenn neben Wasser ein besonders geeignetes organisches Lösemittel zugesetzt wird, z. B. ≤ 10 Gew.-% 1-Methoxypropanol-2.

So können besagte Zusammensetzungen vorteilhaft einen Gehalt an 1-Methoxy-propanol-2 von ≤ 10 Gew.-%, vorzugsweise 5 bis 10 Gew.-%, bezogen auf die gesamte Zusammensetzung, aufweisen. Solche Systeme zeichnen sich in der Regel auch durch einen hohen Flammpunkt aus.

Die gemäß Schritt a) des erfindungsgemäßen Verfahrens eingesetzten wässrigen Zusammensetzungen weisen vorzugsweise einen Gehalt an Wasser von rund 99,5 bis 30 Gew.-%, besonders bevorzugt von 80 bis 50 Gew.-%, bezogen auf die gesamte Zusammensetzung, auf. Bei einem Anteil von rund > 50 % Wasser als Lösemittel bestimmt man bei solchen Beschichtungszusammensetzungen in der Regel den Gehalt an "nichtflüchtigen Anteilen". Die Bestimmung erfolgt üblicherweise durch Verdunsten des Wassers sowie Alkohols gemäß DIN EN ISO 3251 - "Bestimmung des Gehalts an nichtflüchtigen Anteilen". Dazu wird das Mittel in der Regel in einer Einmalschale aus Aluminium über 1 Stunde bei 125 °C konditioniert und der Gehalt nichtflüchtiger Anteile durch Differenzwägung bestimmt. Die Bestimmungsmethode wird vorwiegend für Beschichtungsstoffe, Bindemittel für Beschichtungsstoffe, Polymerdispersionen, Kondensationsharze, Polymerdispersionen mit Füllstoffen, Pigmenten usw. angewendet. Nach dieser Methode werden Relativwerte bestimmt. So wird bei erfindungsgemäß eingesetzten Zusammensetzungen insbesondere ein Gehalt an nichtflüchtigen Anteilen von 0,5 bis 50 Gew.-% bevorzugt.

Darüber hinaus können besagte Zusammensetzungen vorteilhaft einen Gehalt an mindestens einem Tensid aufweisen. Insbesondere kann so durch den Zusatz eines Silicontensids, beispielsweise BYK-348 (polyethermodifiziertes Polydimethylsiloxan), die Untergrundbenetzung zusätzlich verbessert werden, was zur Vermeidung von Verlaufsproblemen bei der Herstellung von Beschichtungen, insbesondere auf metallischen Substraten, vorteilhaft beitragen kann. Bevorzugt wird in der Regel ein Gehalt an Tensid von < 0,5 Gew.-%, insbesondere von 0,1 bis 0,3 Gew.-%, bezogen auf die Zusammensetzung.

Weiterhin kann man besagten Sol-Gel-Zusammensetzungen gemäß Schritt a) des erfindungsgemäßen Verfahrens so genannte Hydrosil-Systeme zusetzen.

Unter Hydrosil-Systemen werden hier im Wesentlichen auf Wasser basierende, chloridfreie, vorwiegend leicht saure, wässrige Systeme verstanden, die ein Gemisch wasserlöslicher, praktisch vollständig hydrolysierter (Fluor)Alkyl-/Aminoalkyl-/Hydroxy- (bzw. Alkoxy-)Siloxane enthalten, wie sie beispielsweise aus EP 0 716 127 A, EP 0 716128 A, EP 0 846 717 A sowie EP 1101 787 A zu entnehmen sind. Beispiele sind u.a. Dynasylan^{®}HS 2909, Dynasylan^{®}HS 2775, Dynasylan^{®}HS 2776, Dynasylan^{®} HS 2627. Besonders vorteilhaft ist ein Zusatz von Dynasylan^{®} F 8815 zu einer vorliegenden Zusammensetzung im Gewichtsverhältnis von 1 : 0,01 bis 0,01 : 1, besonders bevorzugt von rund 1 : 0,1 bis 0,1 : 1,
wobei das hier eingesetzte wässrige Dynasylan^{®} F 8815 vorzugsweise einen Wirkstoffgehalt < 40 Gew.-%, besonders bevorzugt von 0,1 bis 20 Gew.-%, insbesondere von rund 13 bis 15 Gew.-%, bezogen auf die Zusammensetzung und bestimmt gemäß DIN EN ISO 3251, wie oben beschrieben, enthält. So erhaltene Zusammensetzungen zeichnen sich bei Applikation vorteilhaft durch stark hydrophobe und oleophobe Eigenschaften (auch "easy to clean" genannt) der Beschichtung aus.

So bevorzugt man in Schritt a) des erfindungsgemäßen Verfahrens ebenfalls eine Sol-Gel-Zusammensetzung, die auf der Grundlage der Komponenten (i) bis (iv) sowie gegebenenfalls (v) und gegebenenfalls (vi) und unter Zusatz eines Hydrosil-Systems im Gewichtsverhältnis von 1 : 0,01 bis 0,01 : 1 beruht, wobei das hier eingesetzte Hydrosil-System bevorzugt einen Wirkstoffgehalt an besagten Siloxanen von < 80 Gew.-%, besonders bevorzugt < 40 Gew.-%, enthält.

In der Regel legt man zur Herstellung einer erfindungsgemäß eingesetzten Zusammensetzung die Komponente (i) vor, dosiert zunächst (iii) hinzu, danach wird (iv) dosiert und anschließend (ii) zugesetzt, das Verhältnis der Komponenten (ii) zu (i) wird bevorzugt gezielt vorgegeben und als weitere Komponente(n) (v), gegebenenfalls Komponenten (vi) sowie gegebenenfalls ein Verdünnungsmittel zugesetzt. Als zusätzliches Verdünnungsmittel kann man Wasser, Methanol, Ethanol und/oder 1-Methoxy-propanol-2 sowie weitere Alkohole einsetzen.

Dabei führt man die Umsetzung vorzugsweise bei einer Temperatur von 0 bis 35 °C, besonders bevorzugt bei 5 bis 25 °C, für einen Zeitraum von 1 bis 60 Minuten, besonders bevorzugt über 5 bis 20 Minuten, durch und lässt das so erhaltene Produktgemisch geeigneterweise bei einer Temperatur von rund 35 bis 85 °C, vorzugsweise bei 50 bis 60 bzw. 60 bis 70 °C, d. h. bevorzugt etwas unterhalb vom Siedepunkt des Hydrolysealkohols, für 10 Minuten bis 4 Stunden, besonders bevorzugt für 30 Minuten bis 3 Stunden, nachreagieren. Umsetzung und Nachreaktion werden in der Regel unter guter Durchmischung durchgeführt, beispielsweise unter Rühren.

Anschließend kann man aus dem so erhaltenen Produktgemisch den bei der Umsetzung entstandenen Hydrolysealkohol, insbesondere Methanol, Ethanol und/oder n-Propanol, durch Destillation unter vermindertem Druck aus dem System entfernen und gegebenenfalls die dabei entfernte Menge an Alkohol durch eine entsprechende Menge an Wasser ersetzen.

Darüber hinaus kann man dem Reaktions- oder Produktgemisch ein Tensid, beispielsweise - aber nicht ausschließlich - BYK 348, und die beschriebenen weiteren Additive zusetzen.

Man kann aber auch das so erhaltene, in der Regel leicht trübe bis opaleszierende Produktgemisch mit Wasser und/oder 1-Methoxypropanol-2 oder anderen Alkoholen verdünnen bzw. den gewünschten Feststoffgehalt - soweit möglich - einstellen.

Ferner kann man den pH-Wert eines solchen Systems auf 6 bis 9 einstellen.

Weiterhin kann man dem vorliegenden Produktgemisch bzw. der vorliegenden Zusammensetzung ein Hydrosil, vorzugsweise ein solches mit einem fluorfunktionellen oder alkylfunktionellen Wirkstoff, zusetzen. Insbesondere setzt man dabei ein Hydrosilkonzentrat in einer Menge von 13 bis 15 Gew.-%, gerechnet als Wirkstoff und bezogen auf die spätere Zusammensetzung, unter guter Durchmischung zu.

Auf eine Sol-Gel-Schicht gemäß Schritt a) wird man beim erfindungsgemäßen Verfahren in Schritt b) mindestens eine weitere Schicht aus der Reihe organischer Harze oder weiteren Sol-Gel-Beschichtungssystemen erzeugen.

So erzeugt man beim erfindungsgemäßen Verfahren in Schritt b) mindestens eine weitere Schicht auf der Basis konventioneller Beschichtungssysteme, beispielsweise eines Polyesterharzes, Polyetherharzes, Acrylharzes, Epoxidharzes, Alkylharzes, Melaminharzes, Urethanharzes, einer Mischung aus mindestens zwei der zuvor genannten Harze sowie zuvor genannte Harze als wasserbasierte oder lösemittelbasierte flüssige Systeme oder lösemittelfreie Pulverlacksysteme, auch Sol-Gel-Systeme oder Sol-Gel-Hybridsysteme sind geeignet.

Die Härtung bzw. Trocknung mit anschließender Härtung führt man bei den erfindungsgemäß in Schritt a) sowie b) erzeugten Schichten vorzugsweise thermisch und/oder photochemisch durch.

Eine nach dem erfindungsgemäßen Verfahren erhältliche spezielle Schichtenabfolge, d. h. Beschichtung, zeichnet sich in hervorragender Weise als eine Korrosionsschutzschicht für eine Metalloberfläche aus. Dabei zeichnen sich Sol-Gel-Schichten, erhältlich gemäß Schritt a) zusätzlich durch hervorragende Primer-Eigenschaften, d. h. als Haftvermittler, aus.

Gegenstand der vorliegenden Erfindung ist somit auch eine Beschichtung auf einer Metalloberfläche, d. h. eine Schichtenabfolge auf Metall, gekennzeichnet durch
I) eine auf der Metalloberfläche vorliegenden Sol-Gel-Schicht, die durch Beschichten des Metalls mit einer Sol-Gel-Zusammensetzung erhältlich ist,
   wobei die Sol-Gel-Zusammensetzung auf der Umsetzung mindestens der Komponenten
   (i) einem Glycidyloxypropylalkoxysilan,
   (ii) einem wässrigen Kieselsol mit einem SiO₂-Gehalt von > 1 Gew.-%,
   (iii) einer organischen Säure als Hydrolysekatalysator und
   (iv) n-Propylzirkonat, Butyltitanat oder Titanacetylacetonat als Vemetzer basiert,
      und
II) mindestens einer weiteren Schicht, die auf die Schicht gemäß I) aufgebracht ist. Dabei wird gemäß II) mindestens eine Schicht auf der Basis eines Polyesterharzes, Polyetherharzes, Acrylharzes, Epoxidharzes, Alkylharzes, Melaminharzes, Urethanharzes, einer Mischung aus mindestens zwei der zuvor genannten Harze sowie zuvor genannte Harze als wasserbasierte oder lösemittelbasierte flüssige Systeme oder lösemittelfreie Pulverlacksysteme bevorzugt.

Im Allgemeinen kann man eine erfindungsgemäße Korrosionsschutzschicht auf einer Metalloberfläche wie folgt herstellen:
In der Regel legt man zur Herstellung einer erfindungsgemäß eingesetzten Zusammensetzung die Komponente (i) vor, dosiert zunächst (iii) hinzu, danach wird (iv) dosiert und anschließend (ii) zugesetzt, das Verhältnis der Komponenten (ii) zu (i) wird bevorzugt gezielt vorgegeben und als weitere Komponente(n) (v), gegebenenfalls (vi) sowie gegebenenfalls ein Verdünnungsmittel zugesetzt. Vorzugsweise setzt man Additive gemäß Komponente (vi) zum Schluss zu. Soweit man eine Komponente (v) einsetzt, wird dieses bevorzugt zu einem Zeitpunkt der Herstellung eingesetzt, wenn auch Komponente (i) eingesetzt wird. Die Dosierung der Komponenten und deren Umsetzung erfolgen üblicherweise unter guter Durchmischung.

Durch einen hohen Anteil an Kieselsol kann in die Mischung wesentlich mehr Wasser eingebracht werden als für die Hydrolyse des Silans gemäß (i) sowie (v) erforderlich ist. Bei einsetzender Hydrolyse steigt die Temperatur des Reaktionsgemischs in der Regel leicht an. Dabei kann man zusätzlich kühlen oder - sofern erforderlich - leicht heizen. Geeigneterweise lässt man das Reaktions- bzw. Produktgemisch unter Rühren bei leicht höherer Temperatur noch einige Zeit nachreagieren. So liegt nach der Umsetzung in der Regel ein Hydrolysat mit reichlich Wasser sowie Hydrolysealkohol, beispielsweise Methanol, Ethanol oder n-Propanol, vor. Im Allgemeinen ist das Hydrolysat zumindest über eine begrenzte Zeit lagerstabil. Mit der Hydrolyse beginnt auch langsame Kondensation der Silanmoleküle untereinander, aber auch mit OH-Gruppen an der Oberfläche der SiO₂-Partiket, was zur Vorbildung eines anorganisch/organischen Netzwerks führt und es dennoch in der Regel zu keiner Abscheidung von Reaktionsprodukt kommt. Ferner kann man aus dem so erhaltenen Produktgemisch den Hydrolysealkohol, insbesondere toxisches Methanol, entfernen und durch entsprechende Mengen Wasser ersetzen. Auch kann man der vorliegenden Zusammensetzung weitere Komponenten (v) und/oder (vi) vorteilhaft beimischen, beispielsweise ein Tensid, sowie weitere Mengen Wasser, 1-Methoxypropanol-2 sowie ein Hydrosil-Gemisch, um nur einige Beispiele zu nennen. Bei einem hohen Verhältnis von Komponente (ii) zu (i) ist die Wasserverdünnbarkeit in der Regel eingeschränkt, auch sind dann die verdünnten Lösungen weniger lagerstabil. Um geringe Trockenschichtstärken < 10 µm zu erreichen, ist bei manchen Applikationsformen, z. B. Tauchen oder Sprühen, eine starke Herabsetzung des Trockenrückstands durch Lösemittel erforderlich. Sollen hierbei keine organischen Lösemittel, sondern Wasser verwendet werden, so hat sich überraschenderweise gezeigt, dass stark wasserverdünnbare und gleichzeitig lagerstabile Sol-Gel-Zusammensetzungen hergestellt werden können, wenn man ein geringeres Massenverhältnis der Feststoffmasse von Komponente (ii) zu Komponente (i) einstellt: V = Feststoffmasse Komponente (ii)/Masse Komponente (i). Bei einem Verhältnis V ≤ 0,75 werden solche stark wasserverdünnbaren und in Verdünnung lagerstabile Sol-Gel-Beschichtungszusammensetzungen vorteilhaft ermöglicht.

Femer können durch einen entsprechenden Zusatz (v) von Dimethyldiethoxysilan die hydrophobe Wirkung und die Elastizität der Beschichtung verbessert werden. Durch einen Zusatz von Phenylalkoxysilan bei der Herstellung des vorliegenden erfindungsgemäßen Beschichtungsmittels können sowohl die thermische Beständigkeit als auch die Elastizität einer entsprechenden Beschichtung vorteilhaft beeinflusst werden. Ein Zusatz von Methyltriethoxysilan bewirkt vorteilhaft eine Verbesserung der hydrophoben Eigenschaften der Beschichtung. Weiterhin kann die Kratz- und Abriebbeständigkeit insbesondere durch eine Zugabe von Tetraethoxysilan bei der Herstellung des Beschichtungsmittels nochmals verbessert werden.

Flugrostbildung kann auf säureempfindlichen Substraten, wie Stahl, weitgehend verhindert werden, wenn der pH-Wert auf 7 oder leicht darüber eingestellt wird. Zu diesem Zweck können dem Sol-Gel-System basische Substanzen als Additiv zugesetzt werden. Prinzipiell sind alle wasserlöslichen Basen geeignet, besondere Eignung weisen jedoch basische Amine auf, und ganz besonders geeignet sind basische Aminosilane sowie basische Aminosilanhydrolysate, wie beispielsweise Dynasylan^{®} 1151 (Degussa).

Die zu schützende Metalloberfläche wird vor der Beschichtung in der Regel nach allgemein üblichen Verfahren der Lackierindustrie zunächst gereinigt, insbesondere entfettet. So kann man eine Metalloberfläche thermisch, chemisch oder mechanischen behandeln, beispielsweise durch Erhitzen, Sputtern, Bestrahlen, Ätzen, mittels organischer Lösemittel, Sandstrahlen, Polieren, usw.

Die Anwendung einer wie oben beschriebenen Sol-Gel-Beschichtungszusammensetzung kann durch Aufbringen auf ein Substrat, beispielsweise durch Aufstreichen, Spritzen, Sprühen, Rakeln, Tauchen, - um nur einige Möglichkeiten zu nennen - erfolgen. Üblicherweise lässt man anschließend die Beschichtung kurz antrocknen und kann sie dann thermisch nachbehandeln. So wird nach der Sol-Gel-Beschichtung bevorzugt - aber nicht zwingend - eine thermische Behandlung bei einer Temperatur > 150 °C durchgeführt. So kann man zum Beispiel - aber nicht ausschließlich - nach gezieltem Aufrakeln des Sol-Gel-Beschichtungsmittels durch 10minütige Trocknung bei Raumtemperatur und 5 Minuten thermischer Nachbehandlung bei rd.200°C auf einem Metall-, insbesondere Aluminiumsubstrat vorteilhaft eine ca. 0,1 bis 5 µm dicke transparente, kratzfeste Schicht erzeugen. Ebenso kann man nach dem Aufbringen der Zusammensetzung auf das Substrat die Beschichtung geeigneterweise 5 bis 15 Minuten, vorzugsweise rund 10 Minuten, ablüften und vorteilhaft bei einer Temperatur im Bereich zwischen 150 bis 220 °C aushärten. Man kann aber auch nach der Trocknung der Sol-Gel-Schicht bei Raumtemperatur eine weitere Beschichtung auf die Sol-Gel-Schicht auftragen, z. B. einen Coil Coating Lack, und anschließend das gesamte Beschichtungssystem gemeinsam thermisch aushärten. So kann man beispielsweise - aber nicht ausschließlich - die Härtung unter folgenden Bedingungen vorteilhaft durchführen: Trocknungseinheit vorheizen, dann 30 bis 60 Minuten bei 150 °C oder 10 bis 30 Minuten bei 180 °C oder rund 20 Minuten bei 200 °C oder etwa 10 bis 20 Minuten bei 220 °C. Dabei kann man Schichtdicken der Sol-Gel-Schicht bzw. des Sol-Gel-Primers von < 1 bis 15 µm, vorzugsweise 0,1 bis 10 µm, erzielen.

Man kann aber auch auf die auf eine Metalloberfläche aufgebrachte und ausgehärtete Sol-Gel-Schicht eine oder mehrere weitere Schichten, vorzugsweise Lackschichten, insbesondere solche auf der Basis besagter Harze, auftragen, bis die gewünschte Korrosionsschutzschichtenabfolge bzw. der gewünschte dekorative Effekt erreicht wird. Als zusätzliche Lackschichten auf der vorliegenden Sol-Gel-Schicht eignen sich in der Regel alle handelsüblichen Lacksysteme. Die Applikation dieser zusätzlichen Schichten kann in der Regel nach den Angaben des jeweiligen Herstellers erfolgen.

Eine erfindungsgemäße Korrosionsschutzschicht, bestehend aus der Sol-Gel-Schicht und der darauf aufgebrachten Deckschicht(en), eignet sich insbesondere zur Erzeugung mechanisch stabiler, kratz- und abriebbeständiger, stark hydrophober, aber auch chemikalienbeständiger Beschichtungen und mit einer nochmals verbesserten Korrosionsschutzwirkung auf Metalloberflächen.

So erzeugt man vorteilhaft eine erfindungsgemäße Korrosionsschutzschicht vorzugsweise - aber nicht ausschließlich - auf Metallen einschließlich Metalllegierungen, wie Aluminium, Aluminiumlegierungen oder Stahl, Werkzeugstahl oder verzinktem Stahl, beispielsweise auf Blechen oder Formteilen, z. B. in der Autoindustrie, um nur einige Beispiele zu nennen.

Daher sind ebenfalls Gegenstand der vorliegenden Erfindung Artikel aus Metall mit einer erfindungsgemäßen Korrosionsschutzschicht.

Weiter ist Gegenstand der vorliegenden Erfindung die Verwendung einer erfindungsgemäß hergestellten bzw. erhältlichen Schicht bzw. Beschichtung für den Schutz einer Metalloberfläche, insbesondere von Aluminium, Aluminiumlegierungen, Stahl, verzinkter Stahl sowie Edelstahl, vor Korrosion.

Die vorliegende Erfindung wird durch die nachfolgenden Beispiele näher erläutert, ohne den Gegenstand der Erfindung zu beschränken.

### Beispiele

### Bestimmung des Feststoffgehalts in Beschichtungsmitteln

Gemäß DIN ISO 3251 versteht man unter dem Feststoffgehalt in Beschichtungsmitteln den Gehalt an nichtflüchtigen Anteilen, wobei die Bestimmung unter wohl definierten Bedingungen durchgeführt wird.

Die Bestimmung des Feststoffgehalts der vorliegenden Beschichtungszusammensetzungen wurde in Anlehnung an DIN ISO 3251 wie folgt durchgeführt (QM-AA AS-FA-SL 7001):

In eine Einmalschale aus Aluminium (d = ca. 65 mm, h = ca. 17 mm) wurde auf einer Analysenwaage ca. 1 g Probe eingewogen (Genauigkeit 1 mg). Das Produkt war durch kurzes Umschwenken gleichmäßig in der Einmalschale zu verteilen. Die Schale wurde 1 Stunde bei ca. 125 °C in einem Trockenschrank gelagert. Nach Beendigung des Trockenvorgangs wurde die Schale 20 Minuten in einem Exsikkator auf Raumtemperatur abgekühlt und auf der Analysenwaage auf 1 mg genau zurückgewogen. Es waren pro Versuch mindestens zwei Bestimmungen durchzuführen und der Mittelwert anzugeben.

### Beurteilung der Korrosionseigenschaften in Anlehnung an DIN 50021 (CASS - Test)

Die beschichteten Metallsubstrate wurden 24 Stunden bei 50 °C in die Prüflösung gestellt. Die Metallsubstrate wurden dabei vollständig von der korrosiven Flüssigkeit bedeckt. Anschließend wurden die Prüfsubstrate aus der Prüflösung herausgenommen und die Korrosion visuell beurteilt:
Beurteilungskriterien:
   + : keine oder nur vereinzelt Korrosionsspuren sichtbar
   o : deutliche Korrosion (Lochfraß) erkennbar
   -: sehr starke Korrosion (Lochfraß) erkennbar

Die Prüflösung wurde entsprechend DIN 50021 hergestellt (vgl. DIN 50021, Seite 3, Abschnitt 5.3, Prüflösung für Prüfung DIN 50021 - CASS).

### Messung der Trockenschichtdicke

Prüfgeräte:
- Dualscope MP4C der Firma Fischer
- Dualscope MP40 der Firma Fischer

### Prüfung:

Zur Messung einer ausgehärteten Beschichtung wurde die Sonde auf die Farbschicht aufgesetzt und der Messwert in µm abgelesen. Je nach Größe der beschichteten Fläche sollten mehrere Messwerte ermittelt werden (3 bis 10). Als Maß für die Streuung konnte die Differenz zwischen dem größten und dem kleinsten Wert oder die Standardabweichung verwendet werden. Die Anzahl der Messungen konnte abgelesen werden.

### Kalibrierung:

Das Gerät wurde vor jeder Messreihe mittels Normierung (Nullpunktbestimmung) am unbeschichteten Messobjekt und anschließender Messung einer Prüffolie überprüft. Falls die Abweichung der gemessenen Schichtdicke > 1 µm war, wurde eine Korrekturkalibrierung mit einem zertifizierten Prüfblättchen vorgenommen.

### Beispiel 1

### Herstellung von Sol-Gel-System 1

Apparatur:
Rührreaktor mit Destilliervorrichtung, Vakuumpumpe
Dosiervorrichtung, Sumpf- und Kopfthermometer

### Durchführung:

415,6 g Dynasylan^{®} GLYMO wurden vorgelegt und unter Rühren 20,6 g Essigsäure zugegeben. Direkt anschließend wurden 41,1 g TYZOR^{®} NPZ zudosiert. Nach 5 Minuten war die Temperatur um ca. 2 bis 5 °C angestiegen. Es wurden dann innerhalb von 1 Minute 417,0 g Levasil^{®} 100S/45 % (wässriges Kieselsol mit 45 Gew.-% Feststoffgehalt) eingerührt. Dabei war auf eine gute Rührwirkung zu achten. Direkt anschließend wurden 477,3 g VE-Wasser ebenfalls schnell zugetropft. Nach Erreichen der Höchsttemperatur (ca. 42 °C) wurde die opake Dispersion 2 Stunden bei 75 bis 80 °C (Rückfluss) weitergerührt. Nach Abkühlen auf ca. 50 °C Sumpftemperatur wurden 356,4 g VE-Wasser nachdosiert. Anschließend wurde das Methanol bei einer Sumpftemperatur von ca. 50 bis 60 °C und einem Absolutdruck von ca. 270 mbar abdestilliert. Die Sumpftemperatur stieg zum Ende der Destillation auf 60 bis 65 °C an bei unverändertem Druck. Die Kopftemperatur stieg ebenfalls auf > 62 °C an. Es wurde nur noch Wasser abdestilliert und die Destillation damit beendet. Nach Abkühlen auf ≤ 50 °C wurde die abdestillierte Menge VE-Wasser, die > 59,4 g betrug, nachdosiert. Die Dispersion wurde noch mindestens 2 Stunden weitergerührt. Abfüllung bei RT.
Das Produkt hatte ein milchig opakes Aussehen.
Das Verhältnis V = Feststoffmasse Komponente (ii)/Masse Komponente (i) betrug 0,45.

### Auswaage:

Ausbeute nahezu 100 % : 1 498 g

**Das Produkt hatte folgende physikalisch chemischen Eigenschaften:**

| | | |
|---|---|---|
| Feststoffgehalt (1 h 125 °C) | 36 Gew.-% | (in Anlehnung an |
| | | DIN ISO 3251) |
| SiO2-Gehalt | ca. 16 Gew.-% | (AN-SAA 1653) |
| pH-Wert | 4 - 5 | |
| Dichte (20 °C) | 1,148 g/ml | (DIN 51757) |
| Viskosität (20 °C) | ca. 8 mPa s | (DIN 53015) |
| Methanol n. Hydrolyse | <3% | (AN-SAA 0272) |

### Beispiel 1a

### Herstellung von Sol-Gel System 1a

Apparatur:
Rührreaktor mit Destilliervorrichtung
Dosiervorrichtung
Innenthermometer

### Durchführung:

363,6g Dynasylan^{®} GLYMO wurden vorgelegt und unter Rühren 18,0 g Essigsäure zugegeben. Direkt anschließend wurden 36,0 g TYZOR^{®} NPZ zudosiert. Nach 5 Minuten war die Temperatur um ca. 2 bis 5 °C angestiegen. Es wurden dann innerhalb von 3 Minuten 782,4 g Levasil^{®} 100S/45 % eingerührt. Dabei war auf eine gute Rührwirkung zu achten.

Nach Erreichen der Höchsttemperatur (10 Minuten nach Ende der Kieselsolzugabe) wurde die opake Dispersion 2 Stunden bei 75 bis 80 °C (Rückfluss) weitergerührt. Nach Abkühlen auf ca. 50 °C Sumpftemperatur wurden 312,0 g VE-Wasser nachdosiert. Anschließend wurde das Methanol bei einer Sumpftemperatur von ca. 50 bis 60 °C und einem Absolutdruck von ca. 270 mbar abdestilliert. Die Sumpftemperatur stieg zum Ende der Destillation auf 63 bis 65 °C. an bei unverändertem Druck. Die Kopftemperatur stieg ebenfalls auf > 62 °C an. Es wurde nur noch Wasser abdestilliert und die Destillation damit beendet. Nach Abkühlen auf ≤ 50 °C wurde die abdestillierte Menge Wasser nachdosiert. Die Dispersion wurde noch ca. 2 Stunden weitergerührt.
Das Produkt hatte ein milchig opakes Aussehen.
Das Verhältnis V = Feststoffmasse Komponente (ii)/Masse Komponente (i) betrug 0,96.

### Auswaage:

Ausbeute nahezu 100 %: 1 364 g

**Analysen:**

| Bestimmung | Ergebnis | Methode |
|---|---|---|
| Viskosität | < 100 mPa s | DIN 53015 |
| Dichte | 1,24 - 1,25 g/ml | DIN 51757 |
| Feststoff | 46% - 49% | in Anlehnung an DIN ISO 3251 |
| pH | 4,7 - 5,0 | |
| SiO₂ | 27 - 30 % | AN-SAA 1653 |
| Methanol n. Hydrolyse | <3% | AN-SAA 0272 |

### Beispiel 2

### Verwendung von Phosphorsäure als Additiv

Platten aus Werkzeug Chromstahl wurden mit folgenden Produkten beschichtet:
a) Mischung aus 50 Gew.-% Sol-Gel-Produkt aus Beispiel 1a und 50 Gew.-% VE-Wasser (= voll entsalztes Wasser),
b) Mischung aus 33,3 Gew.-% Sol-Gel-Produkt aus Beispiel 1a, 33,3 Gew.-% VE-Wasser und 33,3 Gew.-% Phosphorsäure (w = 0,15). Die Konzentration an Phosphorsäure betrug damit in der Mischung ca. 0,0499 Gew.-%.

Die Sol-Gel-Beschichtungssysteme wurden innerhalb von 2 Stunden nach Ansetzen der Mischungen mittels 4 µm Rakel appliziert. Trocknungsbedingungen: 10 Minuten bei 23 °C bei 52 % r. F. und 10 Minuten bei 200 °C im Umlufttrockenschrank. Es wurden glänzende, homogene Beschichtungen erhalten mit Trockenschichtdicken von 1,5 bzw. 0,3 µm.

Die Proben wurden mit je einem Ritz bis zum Substratwerkstoff versehen und anschließend 5 Minuten in 1 %ige NaCl-Lösung getaucht. Anschließend erfolgte eine Lagerung in der Klimakammer bei 40 °C und 82 % rel. Luftfeuchte. Nach 49 Tagen Belastungsdauer ergab sich folgendes Bild: Die mit a) beschichtete Probe zeigte starke Flächenkorrosion, während die mit b) beschichtete Probe nur geringfügige Flächenkorrosion und nur wenig Filiformkorrosion aufwies.

### Beispiel 3

### Verwendung von Plextol^{®} D510 als Additiv

Platten aus Aluminium-Prüfblech (Q-Blech 3105H24) wurden mit folgenden Produkten beschichtet:
a) Sol-Gel-Produkt aus Beispiel 1a,
b) Mischung aus 70 Gew.-% Sol-Gel-Produkt aus Beispiel 1a und 30 Gew.-% Plextol^{®} D510 (wässrige Methylmethacrylat/n-Butylacrylat-Dispersion der Fa. Polymer Latex).

Die Applikation erfolgte innerhalb von 2 Stunden nach Ansatz der Mischung über ein 4 µm Rakel. Die Trockenschichtdicke war in beiden Fällen < 1 µm. Trocknungs-/Aushärtungsbedingungen: 10 Minuten bei Raumtemperatur (23 °C) mit anschließender Aushärtung bei 220 °C (Produkt b) bzw. 200 °C (Produkt a) im Umlufttrockenschrank (10 bis 20 Minuten). Die Beurteilung der Korrosionsperformance erfolgte mittels CASS-Test (Ergebnis vgl. unten stehende Tabelle):

| Produkt aus Beispiel 1a | Plextol^{®} D510 | Beurteilung CASS-Test |
|---|---|---|
| 100% | 0% | - |
| 70% | 30% | + |

### Beispiel 4

### Verwendung von Aerosil^{®} 380 als Additiv

Platten aus Aluminium-Prüfblech (Q-Blech 3105H24) wurden mit folgenden Produkten beschichtet:
a) Sol-Gel-Produkt aus Beispiel 1 a,
b) Mischung aus 88 Gew.-% Sol-Gel-Produkt aus Beispiel 1a, 10 Gew.-% VE-Wasser und 2 Gew.-% Aerosil^{®} 380 (Flammkieselsäure der Fa. Degussa),
c) Mischung aus 83 Gew.-% Sol-Gel-Produkt aus Beispiel 1a, 10 Gew.-% VE-Wasser und 7 Gew.-% Aerosil^{®} 380 (Flammkieselsäure der Fa. Degussa).

Die Applikation erfolgte innerhalb von 2 Stunden nach Ansatz der Mischung über ein 4 µm Rakel. Die Trockenschichtdicke war in allen Fällen < 1 µm. Trocknungs- Aushärtungsbedingungen: 10 Minuten bei Raumtemperatur (23 °C) mit anschließender Aushärtung bei 220 °C im Umlufttrockenschrank (10 Minuten) bei b) und bei 200 °C bei a) und c) (10 Minuten). Die Beurteilung der Korrosionsperformance erfolgte mittels CASS-Test (Ergebnis vgl. untenstehende Tabelle):

| Produkt aus Beispiel 1a | Aerosil^{®} 380 | Beurteilung CASS-Test |
|---|---|---|
| 100% | 0% | - |
| 88 % | 2% | + |
| 83 % | 7% | + |

### Beispiel 5

### Sol-Gel-System aus Beispiel 1a im Vergleich zu kommerziellen Primern bzw. Haftvermittlern

Aluminiumsubstrate (Aluprüfblech, Legierung 3105H24), Stahlsubstrate (kalt gewalzter Stahl S36) sowie Substrate aus verzinktem Stahlblech wurden mit folgenden Beschichtungssystemen behandelt:
a) Sol-Gel-System aus Beispiel 1a,
b) TU-Universalgrund [Lösemittel basierter (650 g/l VOC) Universalprimer der Fa. Relius],
c) Bonderite NT 1 (schwermetall- und phosphatfreie reaktive Konversionsbeschichtung der Fa. Henkel).

Produkt a) wurde auf allen Substraten mittels 4 µm Rakel appliziert (Trockenschichtdicke < 1 µm). Trocknungsbedingungen: 10 Minuten bei Raumtemperatur (23 °C) und anschließend 20 Minuten bei 220 °C im Umlufttrockenschrank. Produkt b) wurde mittels 100 µm Rakel appliziert, 10 Minuten bei Raumtemperatur getrocknet und 10 Minuten bei 140 °C entsprechend der Empfehlung des Herstellers nachvemetzt. Produkt c) wurde entsprechend der Herstellerempfehlungen bei Raumtemperatur (23 °C) via Tauchen appliziert (Tauchzeit 10 Minuten), 5 Minuten bei Raumtemperatur getrocknet und anschließend 10 Minuten bei 180 °C weiter getrocknet.

Die so behandelten Substrate wurden anschließend 24 Stunden bei 50 °C in die oben beschriebene CASS-Prüflösung getaucht, danach mit Wasser abgespült und bezüglich Korrosion beurteilt. Es ergab sich folgendes Bild:

Produkt b) (lösemittelhalbger Dickschichtprimer) zeigte erwartungsgemäß auf allen Substraten keinerlei Korrosion. Nachteilig bei diesem Primer war allerdings der Lösemittelgehalt und die hohe Verbrauchsmenge von ca. 100 ml/m² (100 µm Nassschichtdicke).

Produkt a) (Sol-Gel-System nach Beispiel 1a) zeigte auf dem Aluminiumsubstrat und dem verzinkten Stahlblech nur vereinzelt punktuelle Korrosion und beim Stahlsubstrat Korrosion von ca. 60 % der Gesamtfläche, und das bei einer sehr geringen Verbrauchsmenge von nur ca. 4 ml/m² (4 µm Nassschichtdicke).

Produkt c) zeigte auf allen Substraten sehr starke Korrosion (jeweils 100 % der mit der Prüflösung in Kontakt geratenen Fläche waren korrodiert).

### Beispiel 6

### Sol-Gel-System aus Beispiel 1a als Primer unter einer Coil Coating Beschichtung

Verzinkte Stahlbleche wurden mit Ethylacetat vorgereinigt und im Anschluss mit folgenden Produkten beschichtet:
a) Mischung aus Sol-Gel-Produkt aus Beispiel 1a (80 Gew.-%), Wasser (19,7 Gew.-%) und Verlaufshilfsmittel BYK 348 (0,3 Gew.-%), Substrat a),
b) Mischung aus Sol-Gel-Produkt aus Beispiel 1a (50 Gew.-%), Wasser (20 Gew.-%) und Plextol^{®} D510 (50 Gew.-%), Substrat b).

Die Applikation erfolgte mittels 4 µm Rakel, Trocknungsbedingungen: 10 Minuten bei Raumtemperatur (23 °C) und anschließend 20 Minuten bei 220 °C. Die mit den Produkten a) und b) beschichteten und getrockneten Substrate wurden im Anschluss mit einem Standard-Polyesterlack (Fa. Degussa) lackiert und nach Aushärtung (30 Sekunden, 232 °C) einem Salzsprühtest entsprechend DIN 50021 unterzogen. Mit im Test befand sich ein verzinktes Stahlblech, welches mit einem Standardprimer auf Polyesterbasis (5 µm Trockenschichtdicke) vorbehandelt und mit dem gleichen Polyesterlack wie unter a), b) beschrieben endlackiert und unter gleichen Bedingungen ausgehärtet wurde (Substrat c).

Vor Ausführung des Salzsprühtests wurden sämtliche Proben mit je einem Ritzkreuz bis zum Substratwerkstoff versehen. Nach 500 Stunden Salzsprühbelastung zeigte sich folgendes Bild:
Substrat a): am kreuzförmigen Riss kam es zu einer durch Korrosion bedingten Unterwanderung der Beschichtung von bis zu 43 mm. In der nicht durch Ritzen belasteten Fläche kam es an ca. sechs Stellen zu einer Unterwanderung der Beschichtung von bis zu 5mm.
Substrat b): am kreuzförmigen Riss kam es zu einer durch Korrosion bedingten Unterwanderung der Beschichtung von lediglich bis zu 15 mm. In der nicht durch Ritzen belasteten Fläche kam es nur an ca. zwei Stellen zu einer Unterwanderung der Beschichtung von nur bis zu 2 mm.
Substrat c) (Standardsystem): am kreuzförmigen Riss kam es zu einer durch Korrosion bedingten Unterwanderung der Beschichtung von bis zu 18 mm. In der nicht durch Ritzen belasteten Fläche kam es an ca. zwei Stellen zu einer Unterwanderung der Beschichtung von bis zu 4 mm.
Fazit das Sol-Gel-System b) schnitt überraschend am besten ab und übertraf in der Performance das Standardsystem.

### Beispiel 7

### Wasserverdünnbarkeit der Sol-Gel-Zusammensetzungen aus den Beispielen 1 und 1a

Die Produkte aus den Beispielen 1 und 1a wurden im Verhältnis 1 : 1 mit VE-Wasser verdünnt und bei 50 °C gelagert. Es zeigte sich nach einigen Tagen Lagerdauer bei dem Produkt aus Beispiel 1a ein deutlicher Bodensatz, der beim Produkt aus Beispiel 1 nicht auftrat. Fazit: nur das Produkt aus Beispiel 1 war in Verdünnung mit Wasser lagerstabil. Lagerstabile, wasserverdünnte Produkte sind für die praktischen Applikationen Sprühen und Tauchen wichtig, wenn geringe Trockenschichtstärken von 1 µm und darunter erreicht werden sollen.

### Beispiel 8

### Tauchapplikation mit einem Sol-Gel-System aus Beispiel 1a

Ein sandgestrahltes Stahlblech wurde in das in Beispiel 1a erhaltene Produkt getaucht und nach 1 Minute Tauchzeit aus dem Tauchbad wieder herausgenommen. Die vom Stahlblech zurückgehaltene Menge betrug ca. 80 g/m². Bei einem Feststoffgehalt des Produkts aus Beispiel 1a von 49 % ergab sich eine Trockenschichtdicke von > 20 µm. Um die gewünschte Schichtstärke von < 10 µm zu erreichen, musste demnach mit mehr als 50 % Wasser verdünnt werden. Wie in Beispiel 7 ausgeführt, waren derartige Verdünnungen des Produkts aus Beispiel 1a nicht lagerstabil. War eine starke Verdünnung des Sol-Gel-Systems erforderlich, musste auf verdünnbare Systeme gemäß Beispiel 1 mit gegenüber Produkten aus Beispiel 1 a reduziertem Kieselsolgehalt ausgewichen werden.

### Beispiel 9

### Herstellung eines neutralisierten Sol-Gel-Systems

Das Produkt aus Beispiel 1 wurde in einem Rührgefäß vorgelegt und unter intensivem Rühren und ständiger Kontrolle des pH-Werts mit Dynasylan^{®} 1151 (wässriges Aminosilanhydrolysat der Fa. Degussa) versetzt. Es wurde solange Dynasylan^{®} 1151 zudosiert, bis man einen pH-Wert von 7 erreicht hatte. Das resultierende Produkt war über mehr als acht Wochen bei 54 °C Lagertemperatur stabil.

## Patentansprüche

1. Verfahren zur Erzeugung einer Korrosionsschutzschicht auf einer Metalloberfläche, indem man
a) eine Sol-Gel-Zusammensetzung, die auf der Umsetzung mindestens der Komponenten
(i) einem Glycidyloxypropylalkoxysilan,
(ii) einem wässrigen Kieselsol mit einem SiO₂-Gehalt von > 1 Gew.-%,
(iii) einer organischen Säure als Hydrolysekatalysator und
(iv) n-Propylzirkonat, Butyltitanat oder Titanacetylacetonat als Vemetzer basiert,
auf die Metalloberfläche aufbringt und trocknet und/oder härtet und
b) anschließend auf die Sol-Gel-Schicht mindestens eine weitere Schicht aufbringt und trocknet und/oder härtet.

2. Verfahren nach Anspruch 1,
**dadurch gekennzeichnet,**
**dass** man die Metalloberfläche vor dem Schritt a) reinigt.

3. Verfahren nach Anspruch 1 oder 2,
**dadurch gekennzeichnet,**
**dass** man in Schritt a) eine Sol-Gel-Zusammensetzung einsetzt, die auf mindestens einer weiteren Komponente (v) aus der Reihe Tetraalkoxysilan, Alkylalkoxysilan sowie Phenyltrialkoxysilan basiert.

4. Verfahren nach einem der Ansprüche 1 bis 3,
**dadurch gekennzeichnet,**
**dass** man in Schritt a) eine Sol-Gel-Zusammensetzung einsetzt, die auf mindestens eine weiteren Komponente (vi) aus der Reihe der Phosphorsäuren, der Phosphate, der Polysäuren bzw. Heteropolysäuren, der Salze der Poly- bzw. Heteropolysäuren, der wässrigen Dispersionen organischer Bindemittel, der Verlaufshilfsmittel, der Benetzungsmittel, der Nanopartikel, der Tenside, der Aminoalkylsilane sowie der Aminoalkylsiloxane basiert.

5. Verfahren nach einem der Ansprüche 1 bis 4,
**dadurch gekennzeichnet,**
**dass** man in Schritt a) eine Sol-Gel-Zusammensetzung einsetzt, die einen pH-Wert von 6 bis 9 aufweist, wobei man den pH-Wert durch Zusatz einer Base einstellt.

6. Verfahren nach einem der Ansprüche 1 bis 5,
**dadurch gekennzeichnet,**
**dass** man in Schritt a) eine Sol-Gel-Zusammensetzung einsetzt, die auf der Grundlage der Komponenten (i) bis (iv) sowie gegebenenfalls (v) und gegebenenfalls (vi) und unter Zusatz eines Hydrosil-Systems im Gewichtsverhältnis von 1 : 0,01 bis 0,01 : 1 beruht.

7. Verfahren nach einem der Ansprüche 1 bis 6,
**dadurch gekennzeichnet,**
**dass** man in Schritt a) eine Sol-Gel-Zusammensetzung mit einem Feststoffgehalt von 0,5 bis < 60 Gew.-%, bezogen auf die gesamte Zusammensetzung, einsetzt.

8. Verfahren nach einem der Ansprüche 1 bis 7,
**dadurch gekennzeichnet,**
**dass** man in Schritt a) eine Sol-Gel-Zusammensetzung mit einem Gehalt an Hydrolysealkohol von < 5 Gew.-%, bezogen auf die gesamte Zusammensetzung, einsetzt.

9. Verfahren nach einem der Ansprüche 1 bis 8,
**dadurch gekennzeichnet,**
**dass** man in Schritt a) eine Sol-Gel-Zusammensetzung einsetzt, die zusätzlich mit Wasser verdünnt ist.

10. Verfahren nach einem der Ansprüche 1 bis 9,
**dadurch gekennzeichnet,**
**dass** man in Schritt a) eine Sol-Gel-Zusammensetzung einsetzt, die einen Gehalt an Wasser von 99,5 bis 30 Gew.-%, bezogen auf die gesamte Zusammensetzung, aufweist.

11. Verfahren nach einem der Ansprüche 1 bis 10,
**dadurch gekennzeichnet,**
**dass** man in Schritt a) eine Sol-Gel-Zusammensetzung einsetzt, die auf der Umsetzung mindestens der Komponenten
(i) einem Glycidyloxypropylalkoxysilan,
(ii) einem wässrigen Kieselsol mit einem Feststoffgehalt von > 1 Gew.-%,
(iii) einer organischen Säure als Hydrolysekatalysator und
(iv) n-Propylzirkonat, Butyltitanat oder Titanacetylacetonat als Vemetzer basiert,
wobei man von einem Massenverhältnis der Feststoffmasse der Komponente (ii) zu Komponente (i) ≤ 0,75 ausgeht.

12. Verfahren nach einem der Ansprüche 1 bis 11,
**dadurch gekennzeichnet,**
**dass** man in Schritt b) mindestens eine weitere Schicht aus der Reihe organischer Harze oder weiterer Sol-Gel-Beschichtungssysteme erzeugt.

13. Verfahren nach einem der Ansprüche 1 bis 12,
**dadurch gekennzeichnet,**
**dass** man in Schritt b) mindestens eine weitere Schicht auf der Basis eines Polyesterharzes, Polyetherharzes, Acrylharzes, Epoxidharzes, Alkylharzes, Melaminharzes, Urethanharzes, einer Mischung aus mindestens zwei der zuvor genannten Harze sowie zuvor genannte Harze als wasserbasierte oder lösemittelbasierte flüssige Systeme oder lösemittelfreie Pulverlacksysteme erzeugt.

14. Verfahren nach einem der Ansprüche 1 bis 13,
**dadurch gekennzeichnet,**
**dass** man die Härtung der Beschichtungen thermisch oder photochemisch durchgeführt.

15. Korrosionsschutzschicht auf einer Metalloberfläche erhältlich nach einem der Ansprüche 1 bis 14.

16. Beschichtung auf einer Metalloberfläche,
**gekennzeichnet durch**
I) eine auf der Metalloberfläche vorliegenden Sol-Gel-Schicht, die **durch** Beschichten des Metalls mit einer Sol-Gel-Zusammensetzung erhältlich ist,
wobei die Sol-Gel-Zusammensetzung auf der Umsetzung mindestens der Komponenten
(i) einem Glycidyloxypropylalkoxysilan,
(ii) einem wässrigen Kieselsol mit einem SiO₂-Gehalt von > 1 Gew.-%,
(iii) einer organischen Säure als Hydrolysekatalysator und
(iv) n-Propylzirkonat, Butyltitanat oder Titanacetylacetonat als Vemetzer basiert,
und
II) mindestens einer weiteren Schicht, die auf die Schicht gemäß I) aufgebracht ist.

17. Beschichtung auf einer Metalloberfläche nach Anspruch 16,
**gekennzeichnet durch**
mindestens eine Schicht gemäß II) auf der Basis eines Polyesterharzes, Polyetherharzes, Acrylharzes, Epoxidharzes, Alkylharzes, Melaminharzes, Urethanharzes, einer Mischung aus mindestens zwei der zuvor genannten Harze sowie zuvor genannte Harze als wasserbasierte oder lösemittelbasierte flüssige Systeme oder lösemitteffreie Pulverlackcsysteme.

18. Verwendung einer nach einem der Ansprüche 1 bis 14 hergestellten bzw. nach Anspruch 15 erhältlichen Schicht oder einer Beschichtung nach Anspruch 16 oder 17 für den Schutz einer Metalloberfläche vor Korrosion.

19. Verwendung nach Anspruch 18 für Metalloberflächen aus der Reihe Aluminium, Aluminiumlegierungen, Stahl, Edelstahl und verzinkter Stahl.

20. Artikel mit einer Korrosionsschutzschicht nach den Ansprüchen 1 bis 19.

## Claims

1. Process for producing a corrosion control coat on a metal surface by
a) applying a sol-gel composition based on the reaction of at least the following components
(i) a glycidyloxypropylalkoxysilane,
(ii) an aqueous silica sol having an SiO₂ content of > 1% by weight,
(iii) an organic acid as hydrolysis catalyst, and
(iv) n-propyl zirconate, butyl titanate or titanium acetylacetonate as crosslinker to the metal surface and drying and/or curing the applied film, and
b) subsequently applying at least one further film to the sol-gel coat, and drying and/or curing said film.

2. Process according to Claim 1, **characterized in that** the metal surface is cleaned before step a).

3. Process according to Claim 1 or 2, **characterized in that** in step a) a sol-gel composition is used which is based on at least one further component (v) from the series tetraalkoxysilane, alkylalkoxysilane, and phenyltrialkoxysilane.

4. Process according to any one of Claims 1 to 3, **characterized in that** in step a) a sol-gel composition is used which is based on at least one further component (vi) from the series of phosphoric acids, phosphates, polyacids and heteropolyacids, salts of polyacids and heteropolyacids, aqueous dispersions of organic binders, flow control assistants, wetting agents, nanoparticles, surfactants, aminoalkylsilanes, and aminoalkylsiloxanes.

5. Process according to any one of Claims 1 to 4, **characterized in that** in step a) a sol-gel composition is used which has a pH of 6 to 9, the pH being set by addition of a base.

6. Process according to any one of Claims 1 to 5, **characterized in that** in step a) a sol-gel composition is used for which the basis is components (i) to (iv) and also, where used, (v) and, where used, (vi), and with addition of a Hydrosil system, in a weight ratio of 1:0.01 to 0.01:1.

7. Process according to any one of Claims 1 to 6, **characterized in that** in step a) a sol-gel composition having a solids content of 0.5% to < 60% by weight, based on the overall composition, is used.

8. Process according to any one of Claims 1 to 7, **characterized in that** in step a) a sol-gel composition having a hydrolysis alcohol content of < 5% by weight, based on the overall composition, is used.

9. Process according to any one of Claims 1 to 8, **characterized in that** in step a) a sol-gel composition is used which additionally is diluted with water.

10. Process according to any one of Claims 1 to 9, **characterized in that** in step a) a sol-gel composition having a water content of 99.5% to 30% by weight, based on the overall composition, is used.

11. Process according to any one of Claims 1 to 10, **characterized in that** in step a) a sol-gel composition is used based on the reaction of at least the following components:
(i) a glycidyloxypropylalkoxysilane,
(ii) an aqueous silica sol having a solids content of > 1% by weight,
(iii)an organic acid as hydrolysis catalyst, and
(iv) n-propyl zirconate, butyl titanate or titanium acetylacetonate as crosslinker, starting from a mass ratio of the solids mass of component (ii) to component (i) ≤ 0.75.

12. Process according to any one of Claims 1 to 11, **characterized in that** in step b) at least one further coat is produced, from the series of organic resins or of further sol-gel coating systems.

13. Process according to any one of Claims 1 to 12, **characterized in that** in step b) at least one further coat is produced based on a polyester resin, polyether resin, acrylic resin, epoxy resin, alkyd resin, melamine resin, urethane resin, on a mixture of at least two of the aforementioned resins, and also on aforementioned resins as water-based or solvent-based liquid systems or solvent-free powder coating systems.

14. Process according to any one of Claims 1 to 13, **characterized in that** the coatings are cured thermally or photochemically.

15. Corrosion control coat on a metal surface, obtainable according to any one of Claims 1 to 14.

16. Coating on a metal surface, **characterized by**
I) a sol-gel coat present on the metal surface and obtainable by coating of the metal with a sol-gel composition,
the sol-gel composition being based on the reaction of at least the following components:
(i) a glycidyloxypropylalkoxysilane,
(ii) an aqueous silica sol having an SiO₂ content of > 1% by weight,
(iii) an organic acid as hydrolysis catalyst, and
(iv) n-propyl zirconate, butyl titanate or titanium acetylacetonate as crosslinker,
and
II) at least one further coat applied to the coat as per I).

17. Coating on a metal surface according to Claim 16, **characterized by** at least one coat as per II) based on a polyester resin, polyether resin, acrylic resin, epoxy resin, alkyd resin, melamine resin, urethane resin, on a mixture of at least two of the aforementioned resins, and also on aforementioned resins as water-based or solvent-based liquid systems or solvent-free powder coating systems.

18. Use of a coat prepared according to any one of Claims 1 to 14 or obtainable according to Claim 15, or of a coating according to Claim 16 or 17, for protecting a metal surface from corrosion.

19. Use according to Claim 18 for a metal surface from the series aluminum, aluminum alloy, and steel, including stainless steel and galvanized steel.

20. Article having a corrosion control coat according to any of Claims 1 to 19.

## Revendications

1. Procédé pour la production d'une couche de protection contre la corrosion sur une surface métallique, dans lequel
a) on applique une composition de sol-gel, qui est basée sur la transformation au moins des composants
(i) un glycidyloxypropylalcoxysilane,
(ii) un sol silicique aqueux présentant une teneur en SiO₂ > 1% en poids,
(iii) un acide organique comme catalyseur d'hydrolyse et
(iv) zirconate de n-propyle, titanate de butyle ou acétylacétonate de titane comme réticulant,
sur la surface métallique et on sèche et/ou durcit et
b) on applique ensuite sur la couche de sol-gel au moins une autre couche et on sèche et/ou durcit.

2. Procédé selon la revendication 1, **caractérisé en ce qu'**on nettoie la surface métallique avant l'étape a).

3. Procédé selon la revendication 1 ou 2, **caractérisé en ce qu'**on utilise dans l'étape a) une composition de sol-gel qui est à base d'au moins un autre composant (v) de la série tétraalcoxysilane, alkylalcoxysilane ainsi que phényltrialcoxysilane.

4. Procédé selon l'une quelconque des revendications 1 à 3, **caractérisé en ce qu'**on utilise dans l'étape a) une composition de sol-gel qui est à base d'au moins un autre composant (vi) de la série des acides phosphoriques, des phosphates, des polyacides ou des hétéropolyacides, des sels des acides polyacides ou hétéropolyacides, des dispersions aqueuses de liants organiques, des adjuvants d'étalement, des agents mouillants, des nanoparticules, des agents tensioactifs, des aminoalkylsilanes ainsi que des aminoalkylsiloxanes.

5. Procédé selon l'une quelconque des revendications 1 à 4, **caractérisé en ce qu'**on utilise dans l'étape a) une composition de sol-gel qui présente un pH de 6 à 9, le pH étant réglé par addition d'une base.

6. Procédé selon l'une quelconque des revendications 1 à 5, **caractérisé en ce qu'**on utilise dans l'étape a) une composition de sol-gel qui est à base des composants (i) à (iv) ainsi que le cas échéant (v) et le cas échéant (vi) et avec addition d'un système d'hydrosil dans un rapport pondéral de 1:0,01 à 0,01:1.

7. Procédé selon l'une quelconque des revendications 1 à 6, **caractérisé en ce qu'**on utilise dans l'étape a) une composition de sol-gel présentant une teneur en solides de 0,5 à < 60% en poids, par rapport à la composition totale.

8. Procédé selon l'une quelconque des revendications 1 à 7, **caractérisé en ce qu'**on utilise dans l'étape a) une composition de sol-gel présentant une teneur en alcool d'hydrolyse < 5% en poids, par rapport à la composition totale.

9. Procédé selon l'une quelconque des revendications 1 à 8, **caractérisé en ce qu'**on utilise dans l'étape a) une composition de sol-gel qui est en outre diluée avec de l'eau.

10. Procédé selon l'une quelconque des revendications 1 à 9, **caractérisé en ce qu'**on utilise dans l'étape a) une composition de sol-gel présentant une teneur en eau de 99,5 à 30% en poids, par rapport à la composition totale.

11. Procédé selon l'une quelconque des revendications 1 à 10, **caractérisé en ce qu'**on utilise dans l'étape a) une composition de sol-gel qui est à base de la transformation au moins des composants
(i) un glycidyloxypropylalcoxysilane,
(ii) un sol silicique aqueux présentant une teneur en solides > 1% en poids,
(iii) un acide organique comme catalyseur d'hydrolyse et
(iv) zirconate de n-propyle, titanate de butyle ou acétylacétonate de titane comme réticulant,
où on part d'un rapport massique de la masse de solide du composant (ii) au composant (i) ≤ 0,75.

12. Procédé selon l'une quelconque des revendications 1 à 11, **caractérisé en ce qu'**on produit dans l'étape b) au moins une autre couche de la série des résines organiques ou d'autres systèmes de revêtement sol-gel.

13. Procédé selon l'une quelconque des revendications 1 à 12, **caractérisé en ce qu'**on produit dans l'étape b) au moins une autre couche à base d'une résine de polyester, de polyéther, d'acryle, d'époxyde, d'alkyle, de mélamine, d'uréthane, d'un mélange d'au moins deux des résines susmentionnées ainsi que de résines susmentionnées comme systèmes liquides à base d'eau ou de solvant ou comme systèmes de laque en poudre, sans solvant.

14. Procédé selon l'une quelconque des revendications 1 à 13, **caractérisé en ce qu'**on réalise le durcissement des revêtements par voie thermique ou photochimique.

15. Couche de protection contre la corrosion sur une surface métallique pouvant être obtenue selon l'une quelconque des revendications 1 à 14.

16. Revêtement sur une surface métallique, **caractérisé par**
I) une couche de sol-gel se trouvant sur la surface métallique, qui peut être obtenue par revêtement du métal par une composition de sol-gel,
où la composition de sol-gel est basée sur la transformation au moins des composants
(i) un glycidyloxypropylalcoxysilane,
(ii) un sol silicique aqueux présentant une teneur en SiO₂ > 1% en poids,
(iii) un acide organique comme catalyseur d'hydrolyse et
(iv) zirconate de n-propyle, titanate de butyle ou acétylacétonate de titane comme réticulant,
et
II) au moins une autre couche qui est appliquée sur la couche selon I).

17. Revêtement sur une surface métallique selon la revendication 16, **caractérisé par**
au moins une selon couche II) à base d'une résine de polyester, de polyéther, d'acryle, d'époxyde, d'alkyle, de mélamine, d'uréthane, d'un mélange d'au moins deux des résines susmentionnées ainsi que de résines susmentionnées comme systèmes liquides à base d'eau ou de solvant ou comme systèmes de laque en poudre, sans solvant.

18. Utilisation d'une couche produite selon l'une quelconque des revendications 1 à 14 ou pouvant être obtenue selon la revendication 15 ou d'un revêtement selon la revendication 16 ou 17 pour la protection d'une surface métallique contre la corrosion.

19. Utilisation selon la revendication 18 pour des surfaces métalliques de la série formée par l'aluminium, les alliages d'aluminium, l'acier, l'acier noble et l'acier zingué.

20. Objet présentant une couche de protection contre la corrosion selon les revendications 1 à 19.
